# FASCICULE DE BREVET EUROPEEN

(11) **EP 0 853 835 B1**
(45) Date de publication et mention de la délivrance du brevet: **24.01.2001**
(21) Numéro de dépôt: 96931695.9
(22) Date de dépôt: 26.09.1996
(51) Int. Cl.: H02H 9/04, H05B 39/10

(54) **DISPOSITIFS ELECTRONIQUES COMMANDABLES PAR UNE IMPULSION DE TENSION**
DURCH SPANNUNGSIMPULS STEUERBARE ELEKTRISCHE GER ÄTE
VOLTAGE PULSE CONTROLLABLE ELECTRONIC DEVICES

(30) Priorité: 29.09.1995 BE 9500810
(43) Date de publication de la demande: 22.07.1998
(73) Titulaire: Vignisse, Pierre, 4500 Huy (BE)
(72) Inventeur: Vignisse, Pierre, 4500 Huy (BE)
(74) Mandataire: Vandeberg, Marie-Paule L.G.
(86) Numéro de dépôt international: BE9600102
(87) Numéro de publication internationale: WO9713307

(56) Documents cités:
- EP-A- 0 284 592
- DE-A- 3 806 288
- US-A- 5 333 105

## Description

La présente invention concerne des dispositifs électroniques pouvant être actionnés par une impulsion de tension. Ces dispositifs peuvent fonctionner en régime de courant continu ou alternatif. Chaque dispositif peut être utilisé comme un shunt monté en parallèle sur des éléments d'un montage série, et permettre de maintenir le courant de ligne dans ce montage en cas de défaillance d'un de ces éléments. Par "montage", on comprendra un dispositif consistant en un montage. Il peut aussi être monté en parallèle sur des éléments à protéger contre des surtensions et des surcharges. Il peut être utilisé comme disjoncteur ou interrupteur automatique. Une autre application possible est de le monter en série avec un circuit éloigné à mettre en route par l'envoi d'une impulsion. Il peut être utilisé comme interrupteur commandable à distance de manière simple ou sélective.

Dans le domaine des shunts montés en parallèle sur chaque élément d'un montage série, on connaît par exemple le montage à semi-conducteurs décrit dans GB-A-1 095 673.

On connaît aussi, par le brevet EP-B1-0 284 592, un dispositif utilisé avec du courant alternatif, permettant le rétablissement du courant dans la ligne en cas de claquage d'un ou de plusieurs éléments faisant partie d'un montage en série (par exemple des lampes halogènes). Ce dispositif consiste en un circuit qui comporte un montage à semi-conducteur, en pratique un triac, dont la première et la deuxième borne sont reliées respectivement en amont et en aval de l'élément sur lequel le dit dispositif est monté.

Ce montage à semi-conducteur est enclenché dès que la tension à ses bornes devient supérieure à un seuil de tension préalablement fixé entre sa gâchette et la deuxième borne. Le seuil de tension est fixé au moyen d'un circuit constitué d'une part d'un diac et d'autre part d'un circuit RC et de deux diodes Zener montées tête-bêche. Celles-ci sont raccordées respectivement à la première et à la deuxième borne par l'intermédiaire d'une résistance de limitation de courant. Le circuit RC est raccordé à la première borne et au noeud entre la résistance de limitation de courant et les diodes Zener. Le diac est raccordé entre la gâchette et le noeud entre la résistance et le condensateur du circuit RC.

Ce montage reste enclenché tant que le courant reste supérieur à une valeur minimum appelée courant de maintien.

Deux problèmes principaux se présentent en pratique lors de l'utilisation d'un dispositif tel que celui décrit dans le brevet EP-B1-0 284 592.

D'une part, il peut subir un échauffement très important. Ce phénomène est lié à l'utilisation d'un triac. Lorsque le dispositif est utilisé avec le courant alternatif disponible sur le réseau (50 Hz), il est désamorcé chaque fois que le courant passe par zéro (c'est-à-dire 100 fois par seconde). Ceci implique une interruption non négligeable du courant pendant quelque millisecondes à chaque passage par zéro. Cette commutation systématique et automatique contribue à l'échauffement du dispositif, alors que celui-ci dissipait déjà l'inévitable P = I x Vₛ, Vₛ étant la tension de seuil du dispositif qui, pour tout élément de ce type atteint au moins 0.7 Volts.

Pour remédier au problème de l'échauffement, on peut utiliser un radiateur, afin de dissiper la chaleur produite. La présence du radiateur augmente les dimensions du dispositif et empêche donc son intégration dans un volume réduit. Elle rend également son raccordement à la terre indispensable, ce qui augmente le coût.

Cette solution n'est en outre pas satisfaisante car la présence du radiateur ne parvient pas à empêcher totalement l'élévation de température du dispositif pendant son utilisation. On observe en effet une élévation équivalente à 12°C par ampère que celui-ci contrôle, ce qui, en pratique, limite la température ambiante d'utilisation à 45°C et impose donc l'éloignement du dispositif de tout générateur de chaleur (par exemple une lampe). Il ne faut pas ignorer que la température au culot d'une lampe peut atteindre 250°C.

D'autre part, la commutation périodique du triac engendre des parasites incompatibles avec les normes de compatibilité électro-magnétique (EMC) actuelles et a fortiori à venir.

De plus, l'apparition d'un parasite sur la ligne peut provoquer l'amorçage accidentel d'un dispositif, lequel engendre donc d'autres parasites susceptibles à leur tour d'amorcer d'autres dispositifs. Dans de telles circonstances, les parasites s'entretiennent mutuellement, ce qui nuit à l'ensemble du montage.

Enfin, la sensibilité du dispositif aux parasites augmente avec la température, ce qui en rend les performances aléatoires.

En pratique, le dispositif décrit dans EP-B1-0 284 592 n'est utilisé que dans l'application décrite dans ce document.

Il existe un besoin pour un shunt adaptable sans surcoût aux normes en matière de compatibilité électro-magnétique (EMC), qui soit d'une taille la plus petite possible, qui puisse être encastré, qui ne doive pas nécessairement être raccordé à la terre, qui dissipe peu ou pas de chaleur et qui accepte une température ambiante de fonctionnement pouvant aller jusqu'à 100°C.

L'objet de la présente invention répond à toutes ces exigences. En outre, grâce à ses qualités, chaque dispositif selon l'invention peut être utilisé avantageusement non seulement comme shunt mais dans plusieurs autres applications.

La présente invention a pour objet un dispositif électronique pour courant continu, appelé ci dessous "dispositif polarisé". Il comprend une première borne en amont et une seconde borne en aval.

L'invention a également pour objet un dispositif électronique qui n'est pas polarisé, et qui peut donc être utilisé en courant alternatif ou en courant continu. Ce dispositif est appelé ci dessous "dispositif non-polarisé". Il comporte également une première et une seconde borne.

Un dispositif suivant l'invention, polarisé ou non-polarisé, peut avoir deux comportements différents: soit il est normalement ouvert, soit il est normalement fermé. Un dispositif normalement ouvert ne laisse passer le courant qu'après avoir reçu à ses bornes une impulsion de tension. Un dispositif normalement fermé présente un comportement inverse.

Le type de comportement du dispositif est déterminé par le choix de certains de ses éléments.

Lorsque, dans la description qui suit, il est fait simplement référence à un dispositif suivant l'invention, il peut s'agir d'un dispositif polarisé ou non-polarisé, présentant un comportement "normalement ouvert" ou "normalement fermé".

Lorsqu'une impulsion de tension, provenant d'une ligne sur laquelle un dispositif est branché et atteignant au moins un seuil V prédéfini pendant une durée prédéfinie, est reçue aux bornes de ce dispositif, celui-ci s'enclenche.

Les dispositifs électroniques suivant l'invention comportent les blocs suivants: un circuit de dérivation à semi-conducteur de puissance, un circuit d'accumulation, un circuit de transfert, un circuit de commande de semi-conducteur de puissance et un circuit de décharge.

Le dispositif électronique pour courant continu selon l'invention ("dispositif polarisé") comprend:
- un circuit de dérivation comprenant un semi-conducteur de puissance ayant une première borne de puissance reliée à la première borne en amont du dispositif, une seconde borne de puissance reliée à la seconde borne en aval du dispositif, et une borne de commande,
- un circuit d'accumulation pour accumuler l'énergie de l'impulsion de tension quand elle est reçue aux bornes du dispositif,
- un circuit de transfert, comprenant un composant présentant un tronçon de courbe U-I à pente négative et un seuil de déclenchement V_{BO} inférieur au seuil V prédéfini atteint par l'impulsion de tension, ce composant permettant le transfert de l'énergie accumulée lorsque le seuil de déclenchement V_{BO} est atteint,
- un circuit de commande de semi-conducteur de puissance comprenant un condensateur dont les bornes sont reliées respectivement à la borne de commande et à la seconde borne de puissance du semi-conducteur de puissance du circuit de dérivation, la tension aux bornes de ce circuit de commande atteignant, grâce à l'énergie transférée du circuit d'accumulation, une valeur suffisante pour permettre la commande du basculement du semi-conducteur de puissance , et
- un circuit de décharge pour accélérer la décharge du condensateur du circuit de commande lorsque la tension aux bornes de ce circuit de commande n'est plus suffisante pour maintenir l'état du semi-conducteur de puissance après basculement.

Le dispositif électronique pour courant alternatif ou courant continu selon l'invention ("dispositif non-polarisé") comprend:
- un circuit de dérivation comportant deux semi-conducteurs de puissance, l'un de ces semi-conducteurs de puissance ayant sa première borne de puissance reliée à la première borne du dispositif, l'autre semi-conducteur de puissance ayant sa première borne de puissance reliée à la seconde borne du dispositif, les deux semi-conducteurs de puissance ayant en commun leur seconde borne de puissance et leur borne de commande,
- un circuit d'accumulation pour accumuler l'énergie de l'impulsion de tension quand elle est reçue aux bornes du dispositif,
- un circuit de transfert comprenant un composant présentant un tronçon de courbe U-I à pente négative et un seuil de déclenchement V_{BO} inférieur au seuil V prédéfini atteint par l'impulsion de tension, ce composant permettant le transfert de l'énergie accumulée lorsque le seuil de déclenchement V_{BO} est atteint,
- un circuit de commande des semi-conducteurs de puissance comprenant un condensateur dont les bornes sont reliées respectivement aux bornes de commande et aux secondes bornes de puissance des semi-conducteurs de puissance du circuit de dérivation, la tension aux bornes de ce circuit de commande atteignant, grâce à l'énergie transférée du circuit d'accumulation, une valeur suffisante pour permettre la commande du basculement d'au moins un semi-conducteur de puissance, et
- un circuit de décharge pour accélérer la décharge du condensateur du circuit de commande lorsque la tension aux bornes de ce circuit de commande n'est plus suffisante pour maintenir l'état des semi-conducteurs de puissance après basculement.

Dans le cas d'un dispositif polarisé, le semi-conducteur de puissance du circuit de dérivation peut être choisi parmi les FET (Field Effect Transistors), les transistors bipolaires, les IGBT (Insulated Gate Bipolar Transistors), les MCT (Metal Oxide Semiconductor Controlled Thyristors), les triacs ou les thyristors.

Dans le cas d'un dispositif non-polarisé, les semi-conducteurs de puissance du circuit de dérivation peuvent être choisis parmi les FET, les transistors bipolaires pourvus d'une diode, les IGBT, les MCT, les triacs ou les thyristors pourvus d'une diode.

Pour l'un et l'autre dispositif, lorsque le(s) semi-conducteur(s) de puissance est (sont) un (des) FET, celui-ci (ceux-ci) peut (peuvent) être choisi(s) parmi les FET à enrichissement et les FET à appauvrissement.

L'utilisation, dans un dispositif selon l'invention, de FET à enrichissement confère à ce dispositif un comportement de circuit "normalement ouvert". De même, L'utilisation, dans un dispositif selon l'invention, de FET à appauvrissement confère à ce dispositif un comportement de circuit "normalement fermé".

Les FET utilisés peuvent être choisis parmi les MOSFET (Metal Oxide Semiconductor Field Effect Transistors), les VFET (Vertical MOSFET), les DFET (Double-diffused MOSFET), les JFET (Junction FET).

Comme DFET à appauvrissement, on peut par exemple utiliser les LND1 et DN25 fabriqués par la société SUPERTEX.

Dans le cas d'un dispositif polarisé, le circuit de décharge comporte avantageusement un transistor ayant une résistance montée entre sa base et la première borne en amont du dispositif.

Dans le cas d'un dispositif non-polarisé, le circuit de décharge comporte un transistor ayant une résistance montée entre sa base et la première borne du dispositif et une résistance montée entre sa base et la deuxième borne du dispositif.

Le circuit de décharge d'un dispositif peut comporter en outre un circuit RC monté en réaction d'émetteur du transistor, ce circuit RC comprenant une résistance montée en parallèle avec un condensateur.

Dans les dispositifs selon l'invention, le condensateur du circuit de commande peut être un condensateur d'au moins 1µF. Dans ce cas, le temps pendant lequel l'état du semi-conducteur de puissance est maintenu après son basculement peut atteindre plusieurs minutes. En particulier, dans les cas où on utilise un condensateur de plusieurs µF, ce temps peut atteindre plusieurs dizaines de minutes.

Le condensateur du circuit de commande peut aussi faire partie intégrante du semi-conducteur de puissance, et dans ce cas, le temps en question est généralement de quelques millisecondes.

Dans un mode d'exécution avantageux, le circuit de commande du (des) semi-conducteur(s) de puissance comporte en outre une résistance en parallèle sur le condensateur. Cette résistance permet de régler la durée du maintien de l'état du (des) semi-conducteur(s) de puissance après leur basculement, parce qu'elle augmente la vitesse de la décharge du condensateur du circuit de commande.

Le circuit d'accumulation d'un dispositif selon l'invention peut comporter un circuit RC comprenant une résistance de limitation de courant et un condensateur montés en série ainsi qu'au moins une diode pour empêcher la décharge du circuit d'accumulation vers la ligne sur laquelle le dispositif est monté.

Dans ce cas, le circuit d'accumulation peut comporter en outre une résistance de décharge en parallèle sur son condensateur.

Cette résistance de décharge permet d'éviter la mise en route accidentelle du dispositif de l'invention lors de l'apparition d'impulsions de tension successives atteignant chacune au moins le seuil V prédéfini mais pendant une durée inférieure à la durée prédéfinie.

Le circuit de transfert d'un dispositif selon l'invention comprend un composant présentant un tronçon de courbe U-I à pente négative et un seuil de déclenchement V_{BO} inférieur au seuil V prédéfini atteint par l'impulsion de tension. Ce composant permet le transfert de l'énergie accumulée dans le circuit d'accumulation lorsque le seuil de déclenchement V_{BO} est atteint. Le seuil V prédéfini n'est corrélé au seuil V_{BO} que pour sa valeur minimale. On peut prévoir un seuil V plus haut en ajoutant une résistance en série avec le condensateur du circuit d'accumulation.

Le composant du circuit de transfert des dispositifs selon l'invention qui présente un tronçon de courbe U-I à pente négative est un élément choisi parmi les semi-conducteurs de type diac, les paires de diodes Zener en opposition, les tubes à gaz, les paires de diodes avalanches en opposition, les surgectors, les dispositifs à UJT (Unijunction Transistors), les VDR (Voltage Dependent Resistors), les MOV (Metal Oxide Varistors), les MLV (Multilayer Varistor), un des éléments précédents associé à un MOSFET.

Lorsque le composant présentant un tronçon de courbe U-I à pente négative est un des éléments cités ci-dessus, il ne supporte souvent pas plus que 30 Volts.

Il est donc souhaitable, dans certains cas, d'augmenter la valeur de la résistance de limitation de courant du circuit RC du circuit d'accumulation. Ceci a pour conséquence une diminution de la rapidité de réaction du dispositif.

Le dispositif de l'invention, qui présente les caractéristiques d'un diac, peut être utilisé comme un composant présentant un tronçon de courbe U-I à pente négative du circuit de transfert.

Le dispositif obtenu de cette manière permet un temps de réaction rapide même avec des tensions importantes.

Outre les cinq circuits mentionnés ci-dessus, les dispositifs de l'invention peuvent comprendre un circuit de mesure raccordé entre les deux bornes du dispositif pour contrôler l'évolution de la tension aux dites bornes. La présence de ce circuit de mesure permet d'atteindre la compatibilité du dispositif avec les normes EMC.

Un circuit de protection peut être raccordé entre les deux bornes du dit dispositif électronique pour protéger les semi-conducteurs de puissance contre les surtensions pendant leur basculement. Le circuit de protection peut comporter un élément choisi parmi les VDR, les MOV, les MLV, les paires de diodes Zener en opposition.

La présente invention a également pour objet des montages dans lesquels un ou plusieurs dispositifs selon l'invention sont utilisés.

Un premier montage est un montage en série d'éléments. Sur chacun d'entre eux un shunt est monté en parallèle, chaque shunt consistant en un dispositif selon l'invention.

Un deuxième montage est le montage en parallèle d'un circuit à protéger et d'un dispositif selon l'invention. Dans ce montage, le dispositif selon l'invention permet la protection du dit circuit contre les surtensions.

Un autre montage possible est le montage en parallèle d'un circuit à protéger et d'un dispositif selon l'invention, ce dispositif permettant la protection du circuit, et étant associé à un élément semi-conducteur. Dans ce cas, l'élément semi-conducteur est choisi parmi les semi-conducteurs de type triac, thyristor ou MOSFET. Dans cette application, le dispositif de l'invention est utilisé comme disjoncteur ou interrupteur automatique réamorçant.

On peut aussi monter en série un circuit à commander à distance et un interrupteur commandable, ledit interrupteur commandable consistant en un dispositif suivant l'invention.

Une autre application possible est le montage d'au moins deux circuits à commander qui sont montés en parallèle et chacun d'eux étant respectivement monté en série avec un dispositif fonctionnant comme interrupteur commandable de manière sélective du circuit avec lequel il est monté en série. Chaque interrupteur commandable est un dispositif selon l'invention. Chaque circuit peut être enclenché via son interrupteur commandable respectif par une impulsion d'une durée et d'une tension prédéterminée pour ledit interrupteur commandable.

D'autres particularités et avantages de l'invention seront décrits pour différents modes de réalisation particuliers, référence étant faite aux dessins annexés, dans lesquels
la figure 1 représente un mode d'exécution d'un dispositif polarisé suivant l'invention, qui fonctionne comme un circuit normalement ouvert,
la figure 2 représente un mode d'exécution d'un dispositif non-polarisé selon l'invention, qui fonctionne également comme un circuit normalement ouvert,
la figure 3 représente d'une manière schématique un montage série à maintien de courant, sur chaque élément duquel un dispositif suivant l'invention est monté en parallèle,
la figure 4 représente un graphique montrant l'évolution, en fonction du temps, de la tension aux bornes d'un dispositif suivant l'invention, pendant sa phase de commutation,
la figure 5 représente le même type de graphique, dans le cas d'une variante d'exécution,
la figure 6 représente d'une manière schématique un montage dans lequel un dispositif suivant l'invention est utilisé en tant que protection d'un circuit contre les surtensions et les surcharges, ce dispositif étant monté en parallèle aux bornes du circuit à protéger,
la figure 7 et la figure 8 représentent d'une manière schématique des montages dans lesquels un dispositif suivant l'invention est utilisé en tant que disjoncteur automatique,
la figure 9 représente d'une manière schématique un montage dans lequel un dispositif suivant l'invention est utilisé en tant qu'interrupteur commandable à distance, ce dispositif étant monté en série avec le circuit qu'il contrôle,
la figure 10 représente d'une manière schématique un montage dans lequel un dispositif suivant l'invention est utilisé en tant qu'interrupteur commandable à distance de manière discriminative, dans lequel des montages tels que celui représenté à la figure 9 sont montés en parallèle.

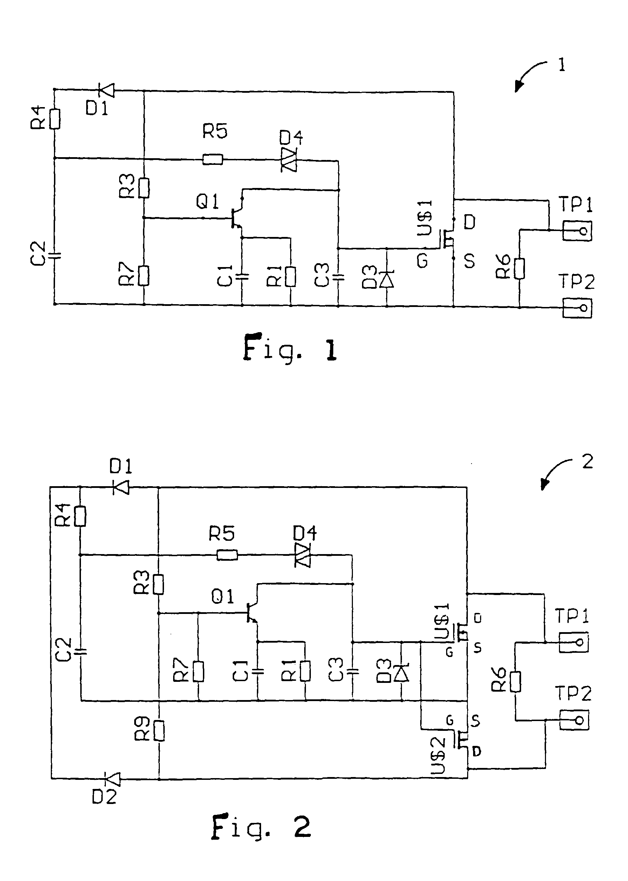

L'objet de l'invention sera d'abord décrit en prenant comme point de départ le schéma de la figure 1 qui représente un dispositif polarisé 1 selon l'invention fonctionnant comme un circuit "normalement ouvert".

Le circuit de dérivation comporte comme semi-conducteur de puissance un MOSFET U$1 à enrichissement. Un circuit d'accumulation R4, C2, D1 accumule l'énergie de l'impulsion de tension quand elle est reçue aux bornes TP1, TP2 du dispositif 1. Un circuit de transfert R5, D4 transfère l'énergie accumulée dans le circuit d'accumulation R4, C2, D1 vers un circuit de commande du MOSFET, ce circuit de commande comportant un condensateur C3. Un circuit de décharge R3, Q1, C1, R1 accélère la décharge du condensateur C3 lorsque la tension aux bornes du dit condensateur C3 est retombée au voisinage de la tension de coupure du MOSFET U$1. Un circuit de mesure R3, R7 contrôle l'évolution de la tension aux bornes TP1, TP2 du dispositif 1 et un circuit de protection R6 protège le MOSFET U$1 contre les surtensions.

Considérons une différence de potentiel positive V₁₂ entre les bornes TP1 et TP2 du montage, différence de potentiel qui est normalement inférieure au seuil de déclenchement V_{BO} du diac D4.

Le transistor Q1 est alors dans un état de conduction imposé par la résistance R3, et V_{CE} ≈ 0 Volt.

Les condensateurs C3 et C1 ne sont pas chargés puisque la résistance R1 les met à la masse. Le potentiel de gâchette du MOSFET U$1 est à zéro et ce dernier se comporte donc comme un circuit ouvert.

Supposons que la valeur de la tension V₁₂ monte. Si elle monte à cause d'une impulsion parasite sur la ligne, c'est-à-dire à cause d'une impulsion de très courte durée et donc inoffensive pour l'élément protégé, la tension aux bornes du condensateur C2 n'atteint normalement pas le seuil de commutation V_{BO} de D4. Toutefois, si elle monte rapidement à une valeur supérieure à V_{BO}, par exemple en cas d'une perturbation sur la ligne, la tension aux bornes de C2 atteint le seuil de commutation de D4, soit V_{BO}, après un délai fixé par un circuit RC (composé de la résistance R4 et du condensateur C2).

A cet instant, D4 commute en mode passant. Un courant impulsionnel passe par le circuit de transfert comportant la résistance de limitation de courant R5 et le diac D4, vers le condensateur C3 du circuit de commande. Le courant impulsionnel charge C3 ainsi que C1 via Q1 qui est toujours en saturation. Ce courant cessera d'exister dès que la tension de D4 sera revenue en dessous d'une valeur déterminée par le type de diac utilisé. Durant ce laps de temps, C2 se décharge dans R5 puisque la diode D1 empêche tout retour vers la source d'énergie.

Si la charge de C2 est suffisante, la tension aux bornes de C3 peut atteindre la valeur de la tension de commande du MOSFET U$1, lequel basculera en état de conduction et fonctionnera ainsi comme circuit de dérivation. En état de conduction, la résistance interne R_{DSon} du MOSFET U$1 n'est que de quelques milliohms. La tension V₁₂ ne vaut alors que quelques millivolts. Q1 sera alors bloqué puisque R3 imposera quelques millivolts à sa base (via le MOSFET U$1). La commutation de Q1 est évidemment favorisée par la charge de C1.

Le MOSFET U$1 présente dans cet état de conduction une résistance R_{Dson} qui peut, suivant les propriétés actuelles de ces éléments, descendre à environ 7 milliohms, ce qui constitue pratiquement les conditions d'un court-circuit parfait.

L'état de conduction du MOSFET U$1 durera tant que la tension aux bornes de C3 restera supérieure à la tension de commande du MOSFET U$1. C3 va se décharger par son propre courant de fuite, celui de la capacité GS du MOSFET U$1 et le courant minoritaire de Q1. La durée maximale de conduction est donc déterminée par les valeurs de C1 et C3, mais aussi par les valeurs des paramètres internes des composants choisis.

En l'absence d'un circuit de décharge, le condensateur C3 se déchargerait très lentement, et la tension entre la source S et la gâchette G du MOSFET U$1 resterait longtemps aux environs de la tension de coupure de ce MOSFET U$1. Au voisinage de cette tension de coupure, celui-ci présente une résistance de plus en plus grande et dissiperait donc une puissance RI² insupportable pour des MOSFET sans radiateur. Or, il importe d'éviter tout problème d'échauffement.

La présence de R3 et Q1, qui forment ensemble le circuit de décharge du dispositif 1 de l'invention, permet de réduire le temps de commutation du MOSFET U$1 en accélérant la décharge de C3 dès que la tension drain-source du dit MOSFET U$1 devient supérieure à un seuil fixé par l'utilisateur. Pₘₐₓ est fixé par le choix du MOSFET U$1 et son boîtier, ou Uₘₐₓ est fixé par le choix d'une résistance R7, qui fait alors partie d'un circuit de mesure en formant un diviseur avec la résistance R3. La présence de R7 n'est pas obligatoire pour le fonctionnement du dispositif 1. Outre qu'elle permet de fixer la valeur Uₘₐₓ, la présence de la résistance R7 réduit considérablement le taux de RFI (qui était déjà fort réduit par rapport au taux de RFI dans le dispositif tel que décrit dans EP-B1-0 284 592). Grâce à l'utilisation de la résistance R7, on peut ainsi s'aligner sur les normes de compatibilité EMC.

La présence du condensateur C1 monté en parallèle avec la résistance R1 n'est pas obligatoire non plus pour le fonctionnement du dispositif 1, mais elle accélère le comportement du transistor Q1.

On observe bien la réaction positive: si R_{Dson} augmente, alors V₁₂ augmente, I_{R3} augmente et I_{CQ1} augmente, d'où C3 se décharge plus vite, d'où augmentation de R_{DSon}, la tension V_{DS} augmente rapidement et ainsi de suite.

Si le défaut ayant fait apparaître la surtension a disparu, le dispositif 1 reprend son état de non-conduction initial. Si le défaut persiste, le cycle recommence.

Le circuit de protection R6 est destiné, le cas échéant, à protéger le MOSFET U$1 contre les surtensions pendant la commutation du dispositif 1, si la tension V₁₂ est plus grande que la tension maximale que peut supporter le MOSFET. On choisira pour R6, selon les impératifs requis une VDR, une MOV, une MLV, deux diodes Zener en opposition, ou n'importe quel autre élément qui puisse protéger le dit MOSFET U$1 contre les surtensions en éliminant les tensions au-delà d'une tension limite choisie par l'utilisateur (en fonction de l'élément de protection).

Le MOSFET U$1 est également protégé contre des surtensions de commande par une diode Zener D3 montée entre sa seconde borne de puissance S et sa gâchette G.

Grâce au dispositif 1 de l'invention, on peut déclencher un court-circuit en un temps très court, sans échauffement inadmissible et en évitant le phénomène d'oscillation qui apparaîtrait si on utilisait classiquement une batterie pour commander le MOSFET U$1 et un comparateur pour mesurer la tension aux bornes TP1, TP2.

Finalement, la possibilité d'atteindre un maintien du court-circuit pendant plusieurs dizaines de minutes réduit quasiment à zéro le taux de RFI alors que l'immunité aux impulsions parasites se voit augmentée grâce au procédé de commande mis en oeuvre.

Si des impulsions qui ont une amplitude assez grande pour atteindre le seuil V prédéfini, mais une durée en principe trop courte pour enclencher le dispositif 1, se suivent rapidement, il pourrait arriver que le dispositif 1 soit enclenché quand même, à cause de la charge qui reste sur le condensateur C2. Pour éviter cela, on peut monter une résistance en parallèle sur le condensateur C2, qui le déchargera assez vite pour ne pas avoir de déclenchement accidentel du dispositif 1.

Le dispositif 2 non-polarisé selon l'invention représenté schématiquement à la figure 2, est une forme d'exécution spécialement prévue pour être utilisée en courant alternatif. Cette forme d'exécution apporte évidemment une plus grande souplesse d'utilisation (pas de polarité nécessaire), et a en substance le même comportement que le dispositif polarisé 1 représenté à la figure 1. Toutefois, le dispositif 2 peut également être utilisé en courant continu.

Les semi-conducteurs de puissance utilisés sont des MOSFET à enrichissement U$1, U$2, et le dispositif 2 fonctionne donc comme un circuit normalement ouvert.

La présence des MOSFET U$1 et U$2, des résistances R9 et R3 et des diodes D1 et D2, similaires respectivement à U$1, R3 et D1, permet au dispositif 2 de l'invention de s'enclencher indépendamment de la polarité de l'énergie présente à ses bornes TP1, TP2.

La résistance R7 du dispositif 2 a la fonction d'un circuit de mesure, comme la résistance R7 du dispositif 1. Elle forme un diviseur avec la résistance R9 ou avec la résistance R3, selon la polarité de la tension V₁₂.

Le circuit de protection R6 a une fonction analogue à celle de R6 dans le dispositif 1 et protège les MOSFET U$1 et U$2 contre les surtensions. Les mêmes types d'éléments peuvent être utilisés.

Dans les figures qui représentent différents montages dans lesquels un dispositif selon l'invention peut être utilisé, on a représenté schématiquement un dispositif non-polarisé 2. Le cas échéant, un dispositif polarisé 1 peut également être utilisé si le montage est alimenté en courant continu.

Dans la description qui précède, on a expliqué le comportement des dispositifs électroniques 1, 2 pour le cas d'un interrupteur normalement ouvert. L'homme du métier trouvera facilement des montages qui se comportent comme un interrupteur normalement fermé, par exemple en utilisant comme semi-conducteurs de puissance U$1, U$2 des MOSFET à appauvrissement.

Si, dans le cas du dispositif 1 selon l'invention, une self est montée entre la première borne de puissance D du semi-conducteur de puissance U$1 et la borne en amont TP1 du dispositif 1, celui-ci se comporte comme un interrupteur normalement fermé et nécessite une impulsion de tension pour s'ouvrir. La self permet d'assurer que le circuit de commande capturera l'énergie de l'impulsion.

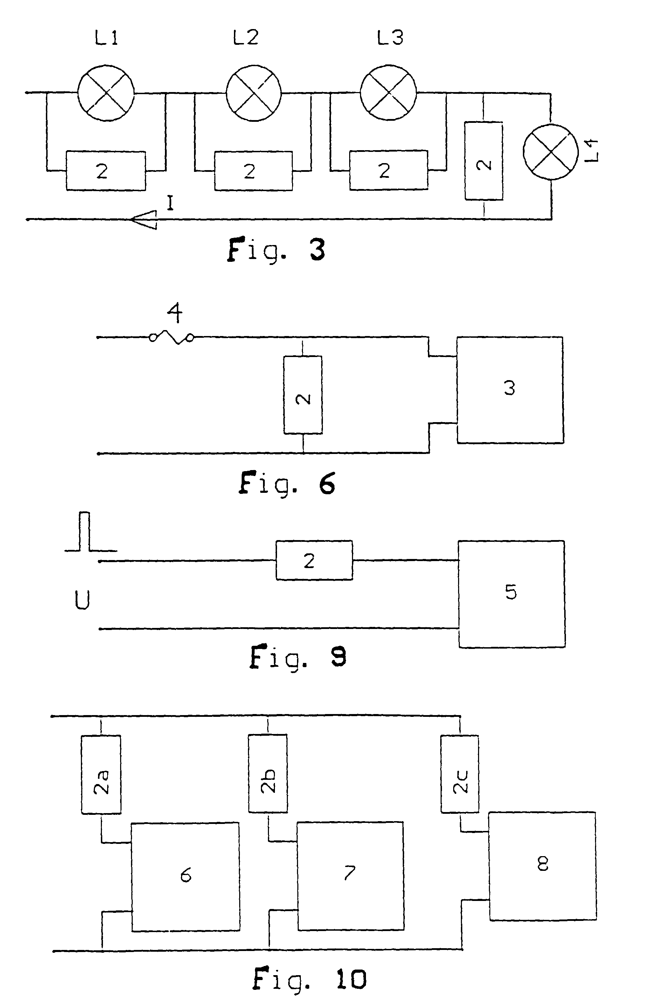

Dans le cas du montage série illustré par la figure 3, un dispositif 2 est monté en parallèle sur chacun des éléments L1, L2, L3, L4 (par exemple des lampes). Si l'élément L1 claque, son dispositif 2 le court-circuite et le courant I continue à alimenter les autres éléments L2, L3, L4 intacts. Ceci signifie que la tension d'alimentation sera divisée entre les autres éléments L2, L3, L4 du montage série, et que chaque élément L2, L3, L4 recevra à ses bornes une tension plus haute. C'est pourquoi l'utilisation d'un dispositif 1 ou 2 dans un tel montage rendra nécessaire l'usage d'une régulation du courant I.

Deux exemples concrets de réalisation du dispositif 2 suivant l'invention, obtenus avec des composants courants sur le marché (c'est-à-dire à faible coût), sont donnés ci dessous:

### Exemple 1

Il s'agit d'un circuit série de 10 lampes de 50 Watts, alimenté par un régulateur de courant fixé à 4,16 Ampères. Un dispositif 2 suivant l'invention dont les caractéristiques figurent dans le tableau ci dessous est monté sur chaque lampe, comme illustré à la figure 3. Une lampe a claqué.

| | Symbole | Valeur ou type |
|---|---|---|
| Résistances | R1 | 33 Ω |
| | R3 | 3.9 kΩ |
| | R4 | 33 Ω |
| | R5 | 33 Ω |
| | R6 | Varistor 39 V |
| | R7 | ∞ |
| | R9 | 3.9 kΩ |
| Condensateurs | C1 | 10 nF |
| | C2 | 1 µF |
| | C3 | 1 µF |
| Transistor | Q1 | 2N2222 |
| MOSFETs | U$1 | RFP50N06 |
| | U$2 | RFP50N06 |
| Diodes | D1 | 1N4148 |
| | D2 | 1N4148 |
| | D3 | 1N4148 |
| Diac | D4 | BR100 (V_{BO} = 34 V) |

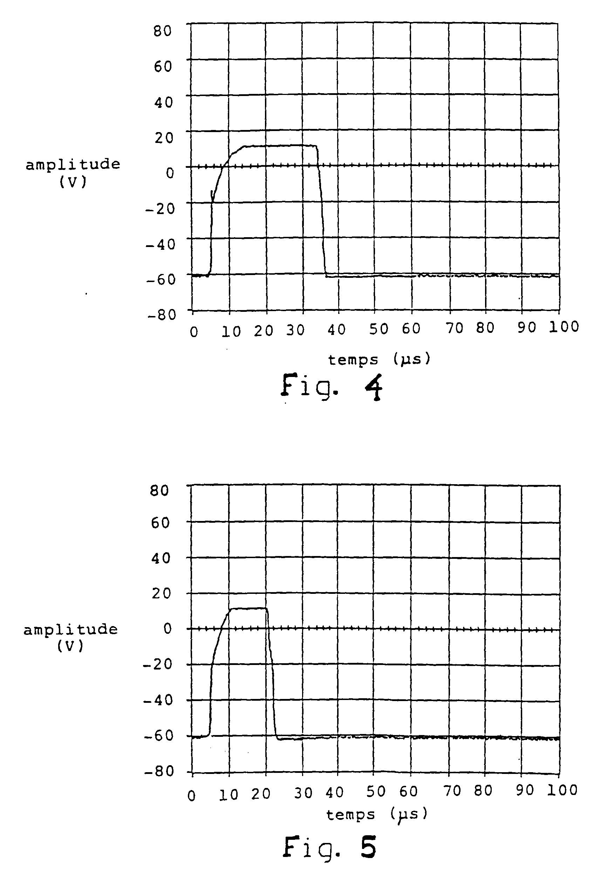

Avec ces valeurs, la tension V₁₂ aux bornes du dispositif 2 ne dépasse pas 70 Volts. Comme on le voit à la figure 4, le court-circuit s'établit après environ 30 µs après le claquage. Ce court-circuit dure au moins pendant 3 minutes.

### Exemple 2

Le circuit et les valeurs de types d'éléments sont identiques à ceux de l'exemple 1, mais R4 = 16 Ω. Dans ce cas, le court-circuit s'établit en 17 µs (voir figure 5).

On atteint avec les composants mentionnés aux exemples 1 et 2 des élévations de température inférieures à 1,2°C par ampère contrôlé. On peut descendre facilement, par un choix judicieux des composants, à moins de 0,4°C/A. On observe un échauffement plus de dix fois inférieur à celui obtenu par tous les autres dispositifs connus, qui autorise donc l'absence de refroidisseur sans aucun risque de surchauffe, tout en permettant l'emploi d'un dispositif suivant l'invention dans un environnement à température élevée.

Les dispositifs suivant l'invention 1 ou 2 peuvent occuper un volume inférieur à 1 cm³ dans la plupart des cas.

L'invention n'est nullement limitée à des dispositifs comprenant les composants particuliers mentionnés ci-dessus; tout autre composant bien choisi peut être utilisé. Les résultats obtenus peuvent être encore améliorés en choisissant d'autres paramètres pour les composants décrits ou d'autres composants.

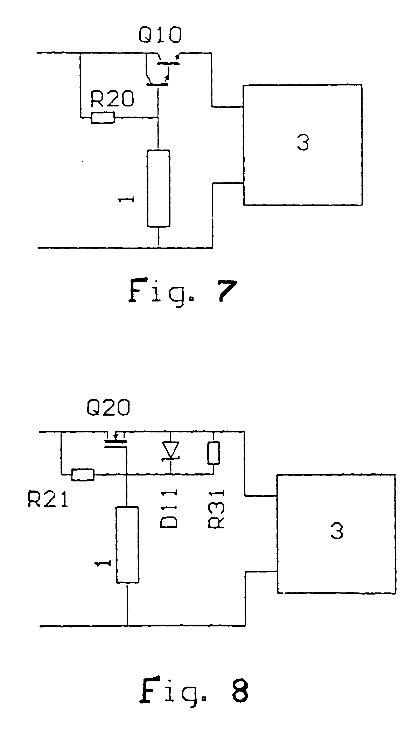

En tant que disjoncteur automatique réamorçant ultra-rapide, un dispositif 1 ou 2 de l'invention peut protéger toute une installation contre des surtensions (figure 6): il suffit de l'insérer en parallèle avec le circuit à protéger 3, entre le fusible 4 et ce circuit 3.

L'intérêt de ce type d'utilisation des dispositifs de l'invention est très grand vu l'importance et la fréquence des surtensions sur les réseaux.

Dans cette application, on peut également, à condition de travailler en courant continu, monter un dispositif 1 ou 2 suivant l'invention sur la base ou la gâchette d'un élément semi-conducteur 10, 11 de type triac, thyristor ou MOSFET (figures 7 et 8). Dans ce cas, le dispositif 1 ou 2 fonctionne comme un circuit normalement ouvert. Le tout est alors monté en parallèle sur le circuit 3 à protéger et fonctionne comme un disjoncteur automatique. Une résistance de déviation R20, R21 est connectée entre la base ou la gâchette de l'élément semi-conducteur 10 ou 11 et son collecteur ou son drain le cas échéant, pour prévoir un chemin de déviation quand le dispositif 1 est enclenché. Quand la surtension aura disparu, le circuit 3 sera réamorcé automatiquement après le délai prévu dans le dispositif 1.

En tant qu'interrupteur, les dispositifs selon l'invention peuvent également permettre la mise en route à distance d'un circuit 5 par l'envoi d'une impulsion (figure 9). Dans ce cas, le dispositif 2 est raccordé en série entre la source d'alimentation U et le circuit à contrôler 5. La source U devra envoyer une impulsion qui, en s'ajoutant à U, dépassera le seuil V_{BO} du dispositif 2, provoquant ainsi son basculement en court-circuit. Cela permettra ainsi l'alimentation du circuit 5 par la source U.

La figure 10 illustre différents circuits 6, 7, 8, montés en série respectivement avec les dispositifs selon l'invention 2a, 2b, 2c, et raccordés en parallèle. Le circuit 6 peut être enclenché par exemple par une impulsion V₁ de durée T₁, le circuit 7 par une impulsion V₂ de durée T₂ et le circuit 8 par une impulsion V₃ de durée T₃. On peut enclencher de façon sélective par une impulsion bien précise un ou plusieurs des dits circuits 6, 7, 8. Chacun des dispositifs 2a, 2b, 2c doit être conçu pour fonctionner comme court-circuit pendant un temps correspondant à la durée de l'impulsion nécessaire pour enclencher le circuit 6, 7, 8 raccordé en série. Par exemple pour le montage de la figure 10, le dispositif 2a pourrait s'enclencher avec une tension V1 de 25 Volts avec une durée T1 de 10 µs, le dispositif 2b avec une tension V2 de 40 Volts avec une durée T2 de 5 µs et le dispositif 2c avec une tension V3 de 15 Volts avec une durée T3 de 30 µs.

On peut concevoir beaucoup de configurations différentes des dispositifs 1 et 2 suivant l'invention.

Par le choix des circuits RC R4C2, R1C1, on peut régler les temps de transition de quelques microsecondes à plusieurs millisecondes. Ainsi, on peut s'aligner sur les normes EMC ,car en réglant le temps de commutation, on choisit le taux de RFI. Dans la mesure où on utilise un dispositif fonctionnant comme un circuit normalement ouvert, on dispose d'un dispositif très performant tout en respectant les normes de sécurité (car on impose 0 Volt plutôt qu'un circuit ouvert, ce qui est plus sécurisant).

On peut choisir le temps pendant lequel le court-circuit se maintient par le choix du rapport C2/C3. Pour des temps de court-circuit très courts, il faut ajouter une résistance en parallèle avec le condensateur C3.

Par le choix du diac D4 on peut fixer la valeur du seuil V_{BO}. Par ailleurs, on peut remplacer le diac D4 par tout composant présentant un tronçon de courbe U-I à pente négative, comme par exemple une tube à gaz, une paire de diodes avalanches en opposition, une paire de diodes Zener en opposition, un surgector, un dispositif à UJT, une VDR, une MOV, une MLV, un des éléments précédents associé à un MOSFET (ce qui réduit énormément les temps de commutation), ou encore un dispositif comme celui présenté à l'une des figures 1 ou 2, réalisé pour de très faibles puissances et des temps très courts.

## Revendications

1. Dispositif électronique (1), pour courant continu, comprenant une première borne (TP1) en amont et une seconde borne (TP2) en aval, ledit dispositif (1) s'enclenchant lorsqu'une impulsion de tension, atteignant au moins un seuil V prédéfini pendant une durée prédéfinie, provenant d'une ligne sur laquelle ledit dispositif (1) est branché, est reçue auxdites bornes (TP1, TP2), caractérisé en ce qu'il comprend:
- un circuit de dérivation comprenant un semi-conducteur de puissance (U$1) ayant une première borne de puissance (D) reliée à la première borne (TP1) en amont du dispositif (1), une seconde borne de puissance (S) reliée à la seconde borne (TP2) en aval du dispositif (1), et une borne de commande (G),
- un circuit d'accumulation (R4, C2, D1) pour accumuler l'énergie de l'impulsion de tension quand elle est reçue aux bornes (TP1, TP2) du dispositif (1),
- un circuit de transfert (R5, D4), comprenant un composant (D4) présentant un tronçon de courbe U-I à pente négative et un seuil de déclenchement V_{BO} inférieur au seuil V prédéfini atteint par l'impulsion de tension, ce composant (D4) permettant le transfert de l'énergie accumulée lorsque le seuil de déclenchement V_{BO} est atteint,
- un circuit de commande de semi-conducteur de puissance (U$1) comprenant un condensateur (C3) dont les bornes sont reliées respectivement à la borne de commande (G) et à la seconde borne de puissance (S) du semi-conducteur de puissance (U$1) du circuit de dérivation, la tension aux bornes de ce circuit de commande atteignant, grâce à l'énergie transférée du circuit d'accumulation (R4, C2, D1), une valeur suffisante pour permettre la commande du basculement du semi-conducteur de puissance (U$1), et
- un circuit de décharge (R3, Q1) pour accélérer la décharge du condensateur (C3) du circuit de commande lorsque la tension aux bornes de ce circuit de commande n'est plus suffisante pour maintenir l'état du semi-conducteur de puissance (U$1) après basculement.

2. Dispositif électronique (2), pour courant alternatif ou courant continu, comprenant une première borne (TP1) et une seconde borne (TP2), ledit dispositif (2) s'enclenchant lorsqu'une impulsion de tension, atteignant au moins un seuil V prédéfini pendant une durée prédéfinie, provenant d'une ligne sur laquelle ledit dispositif (2) est branché, est reçue auxdites bornes (TP1, TP2), caractérisé en ce qu'il comprend:
- un circuit de dérivation comportant deux semi-conducteurs de puissance (U$1, U$2), l'un de ces semi-conducteurs de puissance (U$1) ayant sa première borne de puissance (D) reliée à la première borne (TP1) du dispositif (2), l'autre semi-conducteur de puissance (U$2) ayant sa première borne de puissance (D) reliée à la seconde borne (TP2) du dispositif (2), les deux semi-conducteurs de puissance (U$1, U$2) ayant en commun leur seconde borne de puissance (S) et leur borne de commande (G),
- un circuit d'accumulation (R4, C2, D1, D2) pour accumuler l'énergie de l'impulsion de tension quand elle est reçue aux bornes (TP1, TP2) du dispositif (2),
- un circuit de transfert (R5, D4), comprenant un composant (D4) présentant un tronçon de courbe U-I à pente négative et un seuil de déclenchement V_{BO} inférieur au seuil V prédéfini atteint par l'impulsion de tension, ce composant (D4) permettant le transfert de l'énergie accumulée lorsque le seuil de déclenchement V_{BO} est atteint,
- un circuit de commande des semi-conducteurs de puissance (U$1, U$2) comprenant un condensateur (C3) dont les bornes sont reliées respectivement aux bornes de commande (G) et aux secondes bornes de puissance (S) des semi-conducteurs de puissance (U$1, U$2) du circuit de dérivation, la tension aux bornes de ce circuit de commande atteignant, grâce à l'énergie transférée du circuit d'accumulation (R4, C2, D1, D2), une valeur suffisante pour permettre la commande du basculement d'au moins un semi-conducteur de puissance (U$1, U$2), et
- un circuit de décharge (R3, R9, Q1) pour accélérer la décharge du condensateur (C3) du circuit de commande lorsque la tension aux bornes de ce circuit de commande n'est plus suffisante pour maintenir l'état des semi-conducteurs de puissance (U$1, U$2) après basculement.

3. Dispositif électronique (1) selon la revendication 1, caractérisé en ce que le semi-conducteur de puissance (U$1) du circuit de dérivation peut être choisi parmi les FET (Field Effect Transistors), les transistors bipolaires, les IGBT (Insulated Gate Bipolar Transistors), les MCT (Metal Oxide Semiconductor Controlled Thyristors), les triacs, les thyristors.

4. Dispositif électronique (2) selon la revendication 2, caractérisé en ce que les semi-conducteurs de puissance (U$1, U$2) du circuit de dérivation peuvent être choisis parmi les FET (Field Effect Transistors), les transistors bipolaires pourvus d'une diode, les IGBT (Insulated Gate Bipolar Transistors), les MCT (Metal Oxide Semiconductor Controlled Thyristors), les triacs, les thyristors pourvus d'une diode.

5. Dispositif électronique (1 ; 2) selon l'une quelconque des revendications 3 et 4, caractérisé en ce que le(s) FET est (sont) choisi (s) parmi les FET à enrichissement et les FET à appauvrissement.

6. Dispositif électronique (1 ; 2) selon la revendication 5, caractérisé en ce que le(s) FET est (sont) choisi(s) parmi les MOSFET (Metal Oxide Semiconductor Field Effect Transistors), les VFET (Vertical MOSFET), les DFET (Double-diffused MOSFET), les JFET (Junction FET).

7. Dispositif électronique (1) selon l'une quelconque des revendications 1, 3, 5 et 6, caractérisé en ce que le circuit de décharge (R3, Q1) comporte un transistor (Q1) ayant une résistance (R3) montée entre sa base et la première borne (TP1) en amont dudit dispositif électronique (1).

8. Dispositif électronique (2) selon l'une quelconque des revendications 2, 4, 5 et 6, caractérisé en ce que le circuit de décharge (R3, R9, Q1) comporte un transistor (Q1) ayant une résistance (R3) montée entre sa base et la première borne (TP1) dudit dispositif électronique (2), et une résistance (R9) montée entre sa base et la deuxième borne (TP2) dudit dispositif électronique (2).

9. Dispositif électronique (1 ; 2) selon l'une quelconque des revendications 7 et 8, caractérisé en ce que le circuit de décharge (R3, Q1 ; R3, R9, Q1) comporte en outre un circuit RC monté en réaction d'émetteur du transistor (Q1), ce circuit RC comprenant une résistance (R1) montée en parallèle avec un condensateur (C1).

10. Dispositif électronique (1 ; 2) selon l'une quelconque des revendications précédentes, caractérisé en ce que le condensateur (C3) du circuit de commande est un condensateur d'au moins 1 µF.

11. Dispositif électronique (1 ; 2) selon l'une quelconque des revendications 1 à 9, caractérisé en ce que le condensateur (C3) du circuit de commande fait partie intégrante du semi-conducteur de puissance (U$1 ; U$1, U$2).

12. Dispositif électronique (1 ; 2) selon l'une quelconque des revendications précédentes, caractérisé en ce que le circuit de commande du (des) semi-conducteur(s) de puissance (U$1 ; U$1, U$2) comporte en outre une résistance en parallèle sur son condensateur (C3).

13. Dispositif électronique (1 ; 2) selon l'une quelconque des revendications précédentes, caractérisé en ce que le circuit d'accumulation (R4, C2, D1 ; R4, C2, D1, D2) comporte un circuit RC comprenant une résistance de limitation de courant (R4) et un condensateur (C2) montés en série ainsi qu'au moins une diode (D1 ; D1, D2) pour empêcher la décharge du circuit d'accumulation (R4, C2, D1 ; R4, C2, D1, D2) vers la ligne sur laquelle le dispositif (1 ; 2) est monté.

14. Dispositif électronique (1 ; 2) selon la revendication 13, caractérisé en ce que le circuit d'accumulation (R4, C2, D1 ; R4, C2, D1, D2) comporte en outre une résistance de décharge en parallèle sur son condensateur (C2).

15. Dispositif électronique (1 ; 2) selon l'une quelconque des revendications précédentes, caractérisé en ce que le composant (D4) présentant un tronçon de courbe U-I à pente négative du circuit de transfert (R5, D4) est un élément choisi parmi les semi-conducteurs de type diac, les paires de diodes Zener en opposition, les tubes à gaz, les paires de diodes avalanches en opposition, les surgectors, les dispositifs à UJT (Unijunction Transistors), les VDR (Voltage Dependent Resistors), les MOV (Metal Oxide Varistors), les MLV (Multilayer Varistor), un des éléments précédents associé à un MOSFET.

16. Dispositif électronique (1 ; 2) selon l'une quelconque des revendications 1 à 14, caractérisé en ce que le composant (D4) présentant un tronçon de courbe U-I à pente négative du circuit de transfert (R5, D4) est un dispositif (1 ; 2) selon l'une quelconque des revendications 1 à 14.

17. Dispositif électronique (1 ; 2) selon l'une quelconque des revendications précédentes, caractérisé en ce qu'un circuit de mesure (R3, R7 ; R3, R7, R9) est raccordé entre les deux bornes (TP1, TP2) dudit dispositif (1 ; 2) pour contrôler l'évolution de la tension auxdites bornes (TP1, TP2).

18. Dispositif électronique (1 ; 2) selon l'une quelconque des revendications précédentes, caractérisé en ce qu'un circuit de protection (R6) est raccordé entre les deux bornes (TP1, TP2) dudit dispositif électronique (1 ; 2) pour protéger les semi-conducteurs de puissance (U$1 ; U$1, U$2) contre les surtensions pendant leur basculement.

19. Dispositif électronique (1 ; 2) selon la revendication 18, caractérisé en ce que le circuit de protection (R6) comporte un élément choisi parmi les VDR (résistances dépendantes de la tension), Les MOV (Metal Oxide Varistor), les MLV (Multilayer Varistor), les paires de diodes Zener en opposition.

20. Dispositif consistant en un montage en série d'éléments (L1, L2, L3, L4) sur chacun desquels un shunt est monté en parallèle, caractérisé en ce que chaque shunt consiste en un dispositif (1 ; 2) suivant l'une quelconque des revendications 1 à 19.

21. Dispositif consistant en un montage en parallèle d'un circuit (3) à protéger et d'un dispositif permettant la protection dudit circuit contre des surtensions, caractérisé en ce que ledit dispositif permettant la protection consiste en un dispositif (1 ; 2) suivant l'une quelconque des revendications 1 à 19.

22. Dispositif consistant en un montage en parallèle d'un circuit (3) à protéger et d'un dispositif permettant la protection dudit circuit (3), et étant associé à un élément semi-conducteur, caractérisé en ce que ledit dispositif permettant la protection dudit circuit (3) consiste en un dispositif (1; 2) suivant l'une quelconque des revendications 1 à 19, l'élément semi-conducteur étant choisi parmi les semi-conducteurs de type triac, thyristor, MOSFET.

23. Dispositif consistant en un montage en série d'un circuit (5) à commander à distance avec un interrupteur commandable, caractérisé en ce que ledit interrupteur commandable consiste en un dispositif (1 ; 2) suivant l'une quelconque des revendications 1 à 19.

24. Dispositif consistant en un montage d'au moins deux circuits (6, 7, 8) à commander, ces circuits (6, 7, 8) étant montés en parallèle et chacun d'eux étant respectivement monté en série avec un dispositif (1a, 1b, 1c ; 2a, 2b, 2c) fonctionnant comme interrupteur commandable de manière sélective du circuit (6, 7, 8) avec lequel il est monté en série, chaque circuit (6, 7, 8) pouvant être enclenché via son interrupteur commandable respectif (1a, 1b, 1c ; 2a, 2b, 2c) par une impulsion d'une durée et d'une tension prédéterminée pour ledit interrupteur commandable, caractérisé en ce que chaque dispositif fonctionnant comme interrupteur commandable consiste en un dispositif (1a, 1b, 1c ; 2a, 2b, 2c) suivant l'une quelconque des revendications 1 à 19.

## Patentansprüche

1. Elektronische Vorrichtung (1) für Gleichstrom mit einer ersten vorgeschalteten Anschlußklemme (TP1) und einer zweiten nachgeschalteten Anschlußklemme (TP2), wobei die besagte Vorrichtung (1) sich einschaltet, wenn ein Spannungsimpuls, der mindestens eine vordefinierte Schwelle V während einer vordefinierten Zeitdauer erreicht und von einer Leitung kommt, an die die besagte Vorrichtung (1) angeschlossen ist, an den besagten Anschlußklemmen (TP1, TP2) empfangen wird, dadurch gekennzeichnet, daß sie folgendes umfaßt:
- einen Abzweigungsschaltkreis mit einem Leistungshalbleiter (U$1) mit einem ersten Leistungsanschluß (D), der mit der ersten, der Vorrichtung (1) vorgeschalteten Anschlußklemme (TP1) verbunden ist, einem zweiten Leistungsanschluß (S), der mit der der Vorrichtung (1) nachgeschalteten zweiten Anschlußklemme (TP2) verbunden ist, und einem Steueranschluß (G),
- einen Speicherungsschaltkreis (R4, C2, D1) zum Speichern der Energie des Spannungsimpulses, wenn er an den Anschlußklemmen (TP1, TP2) der Vorrichtung (1) empfangen wird,
- einen Übertragungsschaltkreis (R5, D4) mit einem Bauteil (D4), der einen Kurvenabschnitt U-I mit negativer Neigung und eine Auslösungsschwelle V_{BO}, die unter der von dem Spannungsimpuls erreichten vordefinierten Schwelle V liegt, bietet, wobei dieser Bauteil (D4) die Übertragung der gespeicherten Energie erlaubt, wenn die Auslösungsschwelle V_{BO} erreicht wird,
- einen Steuerschaltkreis des Leistungshalbleiters (U$1) mit einem Kondensator (C3), dessen Anschlüsse mit dem Steueranschluß (G) bzw. dem zweiten Leistungsanschluß (S) des Leistungshalbleiters (U$1) des Abzweigungsschaltkreises verbunden sind, wobei die Spannung an den Anschlüssen dieses Steuerschaltkreises aufgrund der von dem Speicherungsschaltkreis (R4, C2, D1) übertragenen Energie einen zur Ansteuerung des Schaltens des Leistungshalbleiters (U$1) ausreichenden Wert erreicht, und
- einen Entladungsschaltkreis (R3, Q1) zum Beschleunigen der Entladung des Kondensators (C3) des Steuerschaltkreises, wenn die Spannung an den Anschlüssen dieses Steuerschaltkreises nicht mehr ausreicht, den Zustand des Leistungshalbleiters (U$1) nach dem Schalten aufrechtzuerhalten.

2. Elektronische Vorrichtung (2) für Wechselstrom oder Gleichstrom mit einer ersten Anschlußklemme (TP1) und einer zweiten Anschlußklemme (TP2), wobei die besagte Vorrichtung (2) sich einschaltet, wenn ein Spannungsimpuls, der mindestens eine vordefinierte Schwelle V während einer vordefinierten Zeitdauer erreicht und von einer Leitung kommt, an die die besagte Vorrichtung (2) angeschlossen ist, an den besagten Anschlußklemmen (TP1, TP2) empfangen wird, dadurch gekennzeichnet, daß sie folgendes umfaßt:
- einen Abzweigungsschaltkreis mit zwei Leistungshalbleitern (U$1, U$2), wobei einer dieser Leistungshalbleiter (U$1) mit seinem ersten Leistungsanschluß (D) mit der ersten Anschlußklemme (TP1) der Vorrichtung (2) verbunden ist, der andere Leistungshalbleiter (U$2) mit seinem ersten Leistungsanschluß (D) mit der zweiten Anschlußklemme (TP2) der Vorrichtung (2) verbunden ist und den zwei Leistungshalbleitern (U$1, U$2) ihr zweiter Leistungsanschluß (S) und ihr Steueranschluß (G) gemeinsam ist,
- einen Speicherungsschaltkreis (R4, C2, D1, D2) zum Speichern der Energie des Spannungsimpulses, wenn er an den Anschlußklemmen (TP1, TP2) der Vorrichtung (2) empfangen wird,
- einen Übertragungsschaltkreis (R5, D4) mit einem Bauteil (D4), der einen Kurvenabschnitt U-I mit negativer Neigung und eine Auslösungsschwelle V_{BO}, die unter der von dem Spannungsimpuls erreichten vordefinierten Schwelle V liegt, bietet, wobei dieser Bauteil (D4) die Übertragung der gespeicherten Energie erlaubt, wenn die Auslösungsschwelle V_{BO} erreicht wird,
- einen Steuerschaltkreis der Leistungshalbleiter (U$1, U$2) mit einem Kondensator (C3), dessen Anschlüsse mit den Steueranschlüssen (G) bzw. den zweiten Leistungsanschlüssen (S) der Leistungshalbleiter (U$1, U$2) des Abzweigungsschaltkreises verbunden sind, wobei die Spannung an den Anschlüssen dieses Steuerschaltkreises aufgrund der von dem Speicherungsschaltkreis (R4, C2, D1, D2) übertragenen Energie einen zur Ansteuerung des Schaltens von mindestens einem Leistungshalbleiter (U$1, U$2) ausreichenden Wert erreicht, und
- einen Entladungsschaltkreis (R3, R9, Q1) zum Beschleunigen der Entladung des Kondensators (C3) des Steuerschaltkreises, wenn die Spannung an den Anschlüssen dieses Steuerschaltkreises nicht mehr dazu ausreicht, den Zustand der Leistungshalbleiter (U$1, U$2) nach dem Schalten aufrechtzuerhalten.

3. Elektronische Vorrichtung (1) nach Anspruch 1, dadurch gekennzeichnet, daß der Leistungshalbleiter (U$1) des Abzweigungsschaltkreises unter den FETs (Field Effect Transistors), den bipolaren Transistoren, den IGBTs (Insulated Gate Bipolar Transistors), den MCTs (Metal Oxide Semiconductor Controlled Thyristors), den Triacs und den Thyristoren ausgewählt werden kann.

4. Elektronische Vorrichtung (2) nach Anspruch 2, dadurch gekennzeichnet, daß die Leistungshalbleiter (U$1, U$2) des Abzweigungsschaltkreises unter den FETs (Field Effect Transistors), den mit einer Diode ausgestatteten bipolaren Transistoren, den IGBTs (Insulated Gate Bipolar Transistors), den MCTs (Metal Oxide Semiconductor Controlled Thyristors), den Triacs und den mit einer Diode ausgestatteten Thyristoren ausgewählt werden können.

5. Elektronische Vorrichtung (1; 2) nach einem der Ansprüche 3 und 4, dadurch gekennzeichnet, daß der/die FET/s unter den FETs vom Anreicherungstyp und den FETs vom Verarmungstyp ausgewählt wird/werden.

6. Elektronische Vorrichtung (1; 2) nach Anspruch 5, dadurch gekennzeichnet, daß der/die FET/s unter den MOSFET (Metal Oxide Semiconductor Field Effect Transistors), den VFET (Vertical MOSFET), den DFET (Double-diffused MOSFET) und den JFET (Junction FET) ausgewählt wird/werden.

7. Elektronische Vorrichtung (1) nach einem der Ansprüche 1, 3, 5 und 6, dadurch gekennzeichnet, daß der Entladungsschaltkreis (R3, Q1) einen Transistor (Q1) umfaßt, bei dem ein Widerstand (R3) zwischen seiner Basis und der ersten, der besagten elektronischen Vorrichtung (1) vorgeschalteten Anschlußklemme (TP1) angebracht ist.

8. Elektronische Vorrichtung (2) nach einem der Ansprüche 2, 4, 5 und 6, dadurch gekennzeichnet, daß der Entladungsschaltkreis (R3, R9, Q1) einen Transistor (Q1) umfaßt, bei dem ein Widerstand (R3) zwischen seiner Basis und der ersten Anschlußklemme (TP1) der besagten elektronischen Vorrichtung (2) angebracht ist und ein Widerstand (R9) zwischen seiner Basis und der zweiten Anschlußklemme (TP2) der besagten elektronischen Vorrichtung (2) angebracht ist.

9. Elektronische Vorrichtung (1; 2) nach einem der Ansprüche 7 und 8, dadurch gekennzeichnet, daß der Entladungsschaltkreis (R3, Q1; R3, R9, Q1) außerdem einen vom Emitter des Transistors (Q1) rückgekoppelten Schaltkreis RC umfaßt, der einen zu einem Kondensator (C1) parallel geschalteten Widerstand (R1) umfaßt.

10. Elektronische Vorrichtung (1; 2) nach einem der vorhergehenden Ansprüche, dadurch gekennzeichnet, daß der Kondensator (C3) des Steuerschaltkreises ein Kondensator von mindestens 1 uF ist.

11. Elektronische Vorrichtung (1; 2) nach einem der Ansprüche 1 bis 9, dadurch gekennzeichnet, daß der Kondensator (C3) des Steuerschaltkreises einen integralen Teil des Leistungshalbleiters (U$1; U$1, U$2) bildet.

12. Elektronische Vorrichtung (1; 2) nach einem der vorhergehenden Ansprüche, dadurch gekennzeichnet, daß der Steuerschaltkreis des/der Leistungshalbleiter/s (U$1; U$1, U$2) außerdem einen Widerstand parallel zu seinem Kondensator (C3) umfaßt.

13. Elektronische Vorrichtung (1; 2) nach einem der vorhergehenden Ansprüche, dadurch gekennzeichnet, daß der Speicherungsschaltkreis (R4, C2, D1; R4, C2, D1, D2) einen Schaltkreis RC mit einem Strombegrenzungswiderstand (R4) und einem Kondensator (C2), die in Reihe geschaltet sind, und mindestens eine Diode (D1; D1, D2) zum Verhindern der Entladung des Speicherungsschaltkreises (R4, C2, D1; R4, C2, D1, D2) auf die Leitung, an die die Vorrichtung (1; 2) angeschaltet ist, umfaßt.

14. Elektronische Vorrichtung (1; 2) nach Anspruch 13, dadurch gekennzeichnet, daß der Speicherungsschaltkreis (R4, C2, D1; R4, C2, D1, D2) außerdem einen Entladungswiderstand parallel zu seinem Kondensator (C2) umfaßt.

15. Elektronische Vorrichtung (1; 2) nach einem der vorhergehenden Ansprüche, dadurch gekennzeichnet, daß der Bauteil (D4), der einen Kurvenabschnitt U-I mit negativer Neigung bietet, des Übertragungsschaltkreises (R5, D4) ein Element ist, das unter den Halbleitern des Typs Diac, entgegengesetzten Zenerdiodenpaaren, Gasröhren, entgegengesetzt geschalteten Lawinendiodenpaaren, Überspannungssicherungen, UJT (Unijunction Transistors), VDR (Voltage Dependent Resistors), MOV (Metal Oxide Varistors), MLV (Multilayer Varistors), einem der mit einem MOSFET verbundenen vorhergehenden Elemente ausgewählt wird.

16. Elektronische Vorrichtung (1; 2) nach einem der Ansprüche 1 bis 14, dadurch gekennzeichnet, daß der Bauteil (D4), der einen Kurvenabschnitt U-I mit negativer Neigung bietet, des Übertragungsschaltkreises (R5, D4) eine Vorrichtung (1; 2) nach einem der Ansprüche 1 bis 14 ist.

17. Elektronische Vorrichtung (1; 2) nach einem der vorhergehenden Ansprüche, dadurch gekennzeichnet, daß ein Meßschaltkreis (R3, R7; R3, R7, R9) zwischen die zwei Anschlußklemmen (TP1, TP2) der besagten Vorrichtung (1; 2) geschaltet ist, um die Entwicklung der Spannung an den besagten Anschlußklemmen (TP1, TP2) zu kontrollieren.

18. Elektronische Vorrichtung (1; 2) nach einem der vorhergehenden Ansprüche, dadurch gekennzeichnet, daß ein Schutzschaltkreis (R6) zwischen die zwei Anschlußklemmen (TP1, TP2) der besagten elektronischen Vorrichtung (1; 2) geschaltet ist, um die Leistungshalbleiter (U$1; U$1, U$2) gegen Überspannungen während ihres Schaltens zu schützen.

19. Elektronische Vorrichtung (1; 2) nach Anspruch 18, dadurch gekennzeichnet, daß der Schutzschaltkreis (R6) ein Element umfaßt, das unter den VDRs (Voltage Dependent Resistor), MOV (Metal Oxide Varistor), MLV (Multilayer Varistor) und entgegengesetzt geschalteten Zenerdiodenpaaren ausgewählt wird.

20. Vorrichtung bestehend aus einer Reihenanordnung von Elementen (L1, L2, L3, L4), zu denen jeweils eine Parallelschaltung parallelgeschaltet ist, dadurch gekennzeichnet, daß jede Parallelschaltung aus einer Vorrichtung (1; 2) nach einem der Ansprüche 1 bis 19 besteht.

21. Vorrichtung bestehend aus einer Parallelanordnung eines zu schützenden Schaltkreises (3) und einer Vorrichtung, die den Schutz des besagten Schaltkreises gegen Überspannungen erlaubt, dadurch gekennzeichnet, daß die besagte, den Schutz erlaubende Vorrichtung aus einer Vorrichtung (1; 2) nach einem der Ansprüche 1 bis 19 besteht.

22. Vorrichtung bestehend aus einer Parallelanordnung eines zu schützenden Schaltkreises (3) und einer den Schutz des besagten Schaltkreises (3) erlaubenden Vorrichtung und verbunden mit einem Halbleiterelement, dadurch gekennzeichnet, daß die besagte, den Schutz des besagten Schaltkreises (3) erlaubende Vorrichtung aus einer Vorrichtung (1; 2) nach einem der Ansprüche 1 bis 19 besteht, wobei das Halbleiterelement unter den Halbleitern des Typs Triac, Thyristor und MOSFET ausgewählt wird.

23. Vorrichtung bestehend aus einer Reihenanordnung eines fernzusteuernden Schaltkreises (5) mit einem steuerbaren Schalter, dadurch gekennzeichnet, daß der besagte steuerbare Schalter aus einer Vorrichtung (1; 2) nach einem der Ansprüche 1 bis 19 besteht.

24. Vorrichtung bestehend aus einer Anordnung von mindestens zwei zu steuernden Schaltkreisen (6, 7, 8), wobei diese Schaltkreise (6, 7, 8) parallelgeschaltet sind und jeder von ihnen jeweils in Reihe mit einer Vorrichtung (1a, 1b, 1c; 2a, 2b, 2c) geschaltet ist, die als selektiv steuerbare Schalter des Schaltkreises (6, 7, 8), mit dem sie in Reihe geschaltet ist, funktionieren, wobei jeder Schaltkreis (6, 7, 8) über seinen entsprechenden steuerbaren Schalter (1a, 1b, 1c; 2a, 2b, 2c) durch einen Impuls mit einer für den besagten steuerbaren Schalter vorbestimmten Dauer und Spannung eingeschaltet werden kann, dadurch gekennzeichnet, daß jede als steuerbarer Schalter funktionierende Vorrichtung aus einer Vorrichtung (1a, 1b, 1c; 2a, 2b, 2c) nach einem der Ansprüche 1 bis 19 besteht.

## Claims

1. Electronic device (1), for DC current, comprising a first upstream terminal (TP1) and a second downstream terminal (TP2), the said device (1) being triggered when a voltage pulse, reaching at least a predefined threshold V for a predefined duration, originating from a line to which the said device (1) is wired, is received at the said terminals (TP1, TP2), characterized in that it comprises:
- a bypass circuit comprising a power semiconductor (U$1) having a first power terminal (D) connected to the first upstream terminal (TP1) of the device (1), a second power terminal (S) connected to the second downstream terminal (TP2) of the device (1), and a control terminal (G),
- an accumulation circuit (R4, C2, D1) for accumulating the energy of the voltage pulse when it is received at the terminals (TP1, TP2) of the device (1),
- a transfer circuit (R5, D4), comprising a component (D4) exhibiting a segment of U-I curve with negative slope and a triggering threshold V_{BO} below the predefined threshold V reached by the voltage pulse, this component (D4) allowing the transfer of the accumulated energy when the triggering threshold V_{BO} is reached,
- a power semiconductor (U$1) control circuit comprising a capacitor (C3) whose terminals are connected respectively to the control terminal (G) and to the second power terminal (S) of the power semiconductor (U$1) of the bypass circuit, the voltage across the terminals of this control circuit reaching, by virtue of the energy transferred from the accumulation circuit (R4, C2, D1), a value sufficient to allow the power semiconductor (U$1) to be tripped, and
- a discharge circuit (R3, Q1) for accelerating the discharging of the capacitor (C3) of the control circuit when the voltage across the terminals of this control circuit is no longer sufficient to maintain the state of the power semiconductor (U$1) after tripping.

2. Electronic device (2), for AC or DC current, comprising a first terminal (TP1) and a second terminal (TP2), the said device (2) being engaged when a voltage pulse, reaching at least a predefined threshold V for a predefined duration, originating from a line to which the said device (2) is wired, is received at the said terminals (TP1, TP2), characterized in that it comprises:
- a bypass circuit comprising two power semiconductors (U$1, U$2), one of these power semiconductors (U$1) having its first power terminal (D) connected to the first terminal (TP1) of the device (2), the other power semiconductor (U$2) having its first power terminal (D) connected to the second terminal (TP2) of the device (2), the two power semiconductors (U$1, U$2) having their second power terminal (S) and their control terminal (G) in common,
- an accumulation circuit (R4, C2, D1, D2) for accumulating the energy of the voltage pulse when it is received at the terminals (TP1, TP2) of the device (2),
- a transfer circuit (R5, D4), comprising a component (D4) exhibiting a segment of U-I curve with negative slope and a triggering threshold V_{BO} below the predefined threshold V reached by the voltage pulse, this component, (D4) allowing the transfer of the accumulated energy when the triggering threshold V_{BO} is reached,
- a control circuit for the power semiconductors (U$1, U$2) comprising a capacitor (C3) whose terminals are connected respectively to the control terminals (G) and to the second power terminals (S) of the power semiconductors (U$1, U$2) of the bypass circuit, the voltage across the terminals of this control circuit reaching, by virtue of the energy transferred from the accumulation circuit (R4, C2, D1, D2), a value sufficient to allow at least one power semiconductor (U$1, U$2) to be tripped, and
- a discharge circuit (R3, R9, Q1) for accelerating the discharging of the capacitor (C3) of the control circuit when the voltage across the terminals of this control circuit is no longer sufficient to maintain the state of the power semiconductors (U$1, U$2) after tripping.

3. Electronic device (1) according to Claim 1, characterized in that the power semiconductor (U$1) of the bypass circuit can be chosen from among FETs (Field Effect Transistors), bipolar transistors, IGBTs (Insulated Gate Bipolar Transistors), MCTs (Metal Oxide Semiconductor Controlled Thyristors), triacs, thyristors.

4. Electronic device (2) according to Claim 2, characterized in that the power semiconductors (U$1, U$2) of the bypass circuit can be chosen from among FETs (Field Effect Transistors) bipolar transistors furnished with a diode, IGBTs (Insulated Gate Bipolar Transistors), MCTs (Metal Oxide Semiconductor Controlled Thyristors), triacs, thyristors furnished with a diode.

5. Electronic device (1 ; 2) according to either one of Claims 3 and 4, characterized in that the FET or FETs is (are) chosen from among enhancement FETs and depletion FETs.

6. Electronic device (1 ; 2) according to Claim 5, characterized in that the FET or FETs is (are) chosen from among MOSFETs (Metal Oxide Semiconductor Field Effect Transistors), VFETs (Vertical MOSFETs), DFETs (Double-diffused MOSFETs), JFETs (Junction FETs).

7. Electronic device (1) according to any one of Claims 1, 3, 5 and 6, characterized in that the discharge circuit (R3, Q1) comprises a transistor (Q1) having a resistor (R3) arranged between its base and the first upstream terminal (TP1) of the said electronic device (1).

8. Electronic device (2) according to any one of Claims 2, 4, 5 and 6, characterized in that the discharge circuit (R3, R9, Q1) comprises a transistor (Q1) having a resistor (R3) arranged between its base and the first terminal (TP1) of the said electronic device (2), and a resistor (R9) arranged between its base and the second terminal (TP2) of the said electronic device (2).

9. Electronic device (1 ; 2) according to either one of Claims 7 and 8, characterized in that the discharge circuit (R3, Q1 ; R3, R9, Q1) furthermore comprises an RC circuit arranged in the emitter circuit of transistor (Q1), this RC circuit comprising a resistor (R1) arranged in parallel with a capacitor (C1).

10. Electronic device (1 ; 2) according to any one of the preceding claims, characterized in that the capacitor (C3) of the control circuit is a capacitor of at least 1 µF.

11. Electronic device (1 ; 2) according to any one of Claims 1 to 9, characterized in that the capacitor (C3) of the control circuit forms an integral part of the power semiconductor (U$1 ; U$1, U$2).

12. Electronic device (1 ; 2) according to any one of the preceding claims, characterized in that the control circuit of the power semiconductor(s) (U$1 ; U$1, U$2) furthermore comprises a resistor in parallel with its capacitor (C3).

13. Electronic device (1 ; 2) according to any one of the preceding claims, characterized in that the accumulation circuit (R4, C2, D1 ; R4, C2, D1, D2) comprises an RC circuit comprising a current-limiting resistor (R4) and a capacitor (C2) which are arranged in series as well as at least one diode (D1 ; D1, D2) for preventing the discharging of the accumulation circuit (R4, C2, D1 ; R4, C2, D1, D2) to the line on which the device (1 ; 2) is arranged.

14. Electronic device (1 ; 2) according to Claim 13, characterized in that the accumulation circuit (R4, C2, D1 ; R4, C2, D1, D2) furthermore comprises a discharge resistor in parallel with its capacitor (C2).

15. Electronic device (1 ; 2) according to any one of the preceding claims, characterized in that the component (D4) exhibiting a segment of U-I curve with negative slope of the transfer circuit (R5, D4) is an element chosen from among semiconductors of diac type, pairs of Zener diodes in opposition, gas tubes, pairs of avalanche diodes in opposition, surgectors, UJT (Unijunction Transistors) devices, VDRs (Voltage Dependent Resistors), MOVs (Metal Oxide Varistors), MLVs (Multilayer Varistors), one of the preceding elements associated with a MOSFET.

16. Electronic device (1 ; 2) according to any one of Claims 1 to 14, characterized in that the component (D4) exhibiting a segment of U-I curve with negative slope of the transfer circuit (R5, D4) is a device (1 ; 2) according to any one of Claims 1 to 14.

17. Electronic device (1 ; 2) according to any one of the preceding claims, characterized in that a measurement circuit (R3, R7 ; R3, R7, R9) is linked between the two terminals (TP1, TP2) of the said device (1 ; 2) so as to monitor the changes in the voltage across the said terminals (TP1, TP2).

18. Electronic device (1 ; 2) according to any one of the preceding claims, characterized in that a protection circuit (R6) is linked between the two terminals (TP1, TP2) of the said electronic device (1 ; 2) so as to protect the power semiconductors (U$1 ; U$1, U$2) against overvoltages during their tripping.

19. Electronic device (1 ; 2) according to Claim 18, characterized in that the protection circuit (R6) comprises an element chosen from among VDRs (voltage dependent resistors), MOVs (Metal Oxide Varistors), MLVs (Multilayer Varistors), pairs of Zener diodes in opposition.

20. Device consisting of a series arrangement of elements (L1, L2, L3, L4) with each of which a shunt is arranged in parallel, characterized in that each shunt consists of a device (1 ; 2) in accordance with any one of Claims 1 to 19.

21. Device consisting of a parallel arrangement of a circuit (3) to be protected and of a device allowing protection of the said circuit against overvoltages, characterized in that the said device allowing protection consists of a device (1 ; 2) in accordance with any one of Claims 1 to 19.

22. Device consisting of a parallel arrangement of a circuit (3) to be protected and of a device allowing protection of the said circuit (3), and being associated with a semiconductor element, characterized in that the said device allowing protection of the said circuit (3) consists of a device (1 ; 2) in accordance with any one of Claims 1 to 19, the semiconductor element being chosen from among semiconductors of triac, thyristor, MOSFET type.

23. Device consisting of a series arrangement of a circuit (5) to be remotely controlled with a controllable on/off switch, characterized in that the said controllable on/off switch consists of a device (1 ; 2) in accordance with any one of Claims 1 to 19.

24. Device consisting of an arrangement of at least two circuits (6, 7, 8) to be controlled, these circuits (6, 7, 8) being arranged in parallel and each of them being respectively arranged in series with a device (1a, 1b, 1c ; 2a, 2b, 2c) operating as a selectively controllable on/off switch of the circuit (6, 7, 8) with which it is arranged in series, it being possible for each circuit (6, 7, 8) to be triggered via its respective controllable on/off switch (1a, 1b, 1c ; 2a, 2b, 2c) by a pulse of predetermined duration and voltage for the said controllable on/off switch, characterized in that each device operating as a controllable on/off switch consists of a device (1a, 1b, 1c ; 2a, 2b, 2c) in accordance with any one of Claims 1 to 19.
